# EUROPÄISCHE PATENTSCHRIFT

(11) **EP 3 001 012 B1**
(45) Veröffentlichungstag und Bekanntmachung des Hinweises auf die Patenterteilung: **20.12.2023**
(21) Anmeldenummer: 15171402.9
(22) Anmeldetag: 10.06.2015
(51) Int. Cl.: F02C 1/05, F01K 27/00, F02C 6/04, F01D 15/10, F01D 25/24

(54) **VERFAHREN ZUR STROMERZEUGUNG INNERHALB EINES GASNETZES**
METHOD FOR GENERATING ELECTRICITY WITHIN A GAS NETWORK
PROCEDE DE PRODUCTION DE COURANT DANS UN RESEAU DE GAZ

(30) Priorität: 22.08.2014 DE 102014216755
(43) Veröffentlichungstag der Anmeldung: 30.03.2016
(73) Patentinhaber: Westenergie AG, 45131 Essen (DE)
(72) Erfinder: BADURA, Christian, 58239 Schwerte (DE); BRÜMMER, Andreas, 48249 Dülmen (DE); THEISEN, Thomas, 46286 Dorsten (DE)
(74) Vertreter: Hohendorf Kierdorf Patentanwälte PartGmbB

(56) Entgegenhaltungen:
- WO-A1-2014/015307
- CA-A1- 2 742 424
- DE-A1-102007 035 058
- FR-A1- 2 881 482
- US-A1- 2006 026 961
- US-A1- 2008 238 101
- US-A1- 2008 252 078
- US-A1- 2013 298 555

## Beschreibung

Die Erfindung betrifft ein Verfahren zur Stromerzeugung innerhalb eines Gasnetzes mit erdverlegten Gasleitungen unter Ausnutzung einer Gasentspannung von einem ersten höheren Druckniveau auf ein zweites niedrigeres Druckniveau, beispielsweise von einem ersten höheren Gastransportnetz und/oder Gasverteilnetzdruckniveau auf ein zweites Gasbereitstellungsdruckniveau.

Die Erfindung betrifft weiterhin eine Anordnung von Gasdruckentspannungseinrichtungen zur Verwendung bei einem solchen Verfahren.

Die Erfindung betrifft insbesondere ein Verfahren zur Stromerzeugung innerhalb eines Erdgasnetzes. Erdgas wird überwiegend über Rohrleitungen, auch über große Distanzen transportiert. Die Rohrleitungen sind über weite Teile erdverlegt, d.h. unterirdisch verlaufend. Der Druck in den Gasleitungsrohren eines Gasnetzes gestaltet sich je nach Transport und Verteilung des Erdgases unterschiedlich. Die im Allgemeinen aus Stahl bestehenden Ferntransport-Rohrleitungen auf dem Festland haben in der Regel einen Durchmesser von etwa 1400 mm und stehen unter einem Druck von etwa 90 bis zu über 100 bar. Diese sind in der Regel etwa 1 m unter der Erde verlegt. Dieses Gasnetz wird im Allgemeinen auch als Gastransportnetz bezeichnet.

Für die regionale Verteilung von Erdgas gibt es ein spezielles, dichteres Netzsystem von regionalen Betreibern, das beispielsweise in Deutschland mit einem Rohrleitungsdruck von etwa 16 bar betrieben wird. Dieses Gasnetz wird im Allgemeinen auch als Gasverteilnetz bezeichnet. Das Gas aus den Gastransportnetzen wird über sogenannte GDR-Anlagen (Gasdruckregelanlage) unter Reduzierung des Transportdrucks in das Gasverteilnetz eingespeist.

Auf dem Weg bis zum Endkunden wird der Druck von etwa 16 bar weiter auf einige Millibar Überdruck reduziert. Diese Druckreduzierung bedarf einer sogenannten GDRM-Anlage (Gasdruckregel- und Messanlage). Bei der Entspannung des Erdgases von einem hohen Druck auf einen niedrigeren Druck wird aufgrund des Joule-Thomson-Effekts eine Temperatursenke erzeugt, die innerhalb des Gasnetzes zu Taupunktunterschreitungen führen kann, wenn das Gas nicht entsprechend aufgewärmt oder vorgewärmt würde. Dieser Vorgang ist verhältnismäßig energieaufwendig. Grundsätzlich ist es bekannt, die bei der Entspannung frei werdende Volumenänderungsarbeit des Gases zu nutzen. Zusätzlich sind bei Überwindung großer Druckgefälle Vorwärmer vor einer Druckregelung erforderlich, um eine Taupunktunterschreitung des Gases zu vermeiden.

Aus der WO 2005/085603 A1 ist ein Verfahren zur Erzeugung elektrischer Energie unter Ausnutzung des Gasdruckgefälles in einer Gasdruckregeleinrichtung bekannt, bei welchem auf eine Gasvorwärmung verzichtet wird, wobei die dabei entstehende Temperatursenke in einem Wärmetauscher zur Kühlung bzw. zur Umgebungsluftkonditionierung verwendet wird. Dieser Ansatz trägt wesentlich zur verbesserten energetischen Nutzung des Erdgases bei, wobei das in der WO 2005/085603 A1 beschriebene System nicht flächendeckend und ganzjährig einsetzbar ist, zumal die Nutzbarkeit von Kälte (Temperatursenken) für Kühlanlagen und Klimaeinrichtungen örtlich und zeitlich beschränkt ist.

Aus der US 2008/23810 A1 ist ein Verfahren zur Erzeugung elektrischer Energie unter Ausnutzung des aus einem Erdgas-Produktionsbohrloch austretenden Erdgases bekannt.

Aus der US 2006/02696 A1 sind ein Verfahren und eine Vorrichtung zur Nutzung von Geothermie bekannt. Weiterer Stand der Technik ist aus den Dokumenten FR 288142 A1, CA 274242 A1, US 2008/252078 A1, US 2013/298555 und DE 10 2007 035058 A1 bekannt.

Der Erfindung liegt daher die Aufgabe zugrunde, ein Verfahren der eingangs genannten Art sowie eine Gasdruckentspannungseinrichtung bereit zu stellen, welche eine wesentlich effektivere Nutzung des Gasdruckgefälles in einem Gastransportnetz und in einem Gasverteilnetz oder in einem Gastransportnetz oder in einem Gasverteilnetz ermöglichen.

Die Aufgabe wird gelöst durch die Merkmale der nebengeordneten Patentansprüche 1 und 9. Vorteilhafte Ausgestaltungen der Erfindung ergeben sich aus den Unteransprüchen.

Ein Gesichtspunkt der Erfindung betrifft ein Verfahren zur Stromerzeugung innerhalb eines Gasnetzes mit erdverlegten Gasleitungen unter Ausnutzung einer Gasentspannung von einem ersten höheren Gastransportnetz- und/oder Gasverteilnetzdruckniveau auf ein zweites Gasbereitstellungsdruckniveau unter Verwendung wenigstens einer Expansionsmaschine und unter Verwendung wenigstens eines von der Expansionsmaschine angetriebenen Generators, wobei eine Gasvorwärmung ausschließlich unter Ausnutzung von Erdwärme, d.h. ohne Zufuhr weiterer Wärmeenergie, durchgeführt wird und eine Entspannung mit einem Druckabfall Δp über die Expansionsmaschine erfolgt, bei der eine für eine Taupunktunterschreitung kritische Gastemperatur Tₘᵢₙ von beispielsweise 0°C nicht unterschritten wird.

Als ein erstes höheres Druckniveau im Sinne der vorliegenden Erfindung kann jedes höhere Druckniveau an beliebiger Stelle eines Gasnetzes zu verstehen sein. Unter einem zweiten niedrigeren Druckniveau kann jedes Druckniveau innerhalb eines Gasnetzes zu verstehen sein, das kleiner als das erste Druckniveau ist.

Eine Expansionsmaschine im Sinne der vorliegenden Erfindung ist eine Gasentspannungsmaschine, die ein unter Druck stehendes Gas unter Abführung von Arbeit expandiert. Als Expansionsmaschine kann beispielsweise eine Expansionsturbine bzw. ein Expander oder eine Gasturbine im engeren Sinne vorgesehen sein, beispielsweise in Form einer Rohrturbine. Die Begriffe Expander, Expansionsturbine und Gasturbine werden im Folgenden synonym verwendet.

Unter Gas im Sinne der vorliegenden Erfindung ist Erdgas und sogenanntes Biogas zu verstehen. Bei dem Erdgas handelt es sich um ein Gasgemisch auf der Basis von Methan, dessen Zusammensetzung und Brennwert schwanken kann. Auch der Begriff Biogas bezeichnet ein Gasgemisch auf der Basis von Methan, welches ebenfalls in der Zusammensetzung und im Brennwert schwanken kann.

Die Erfindung erfasst ausdrücklich sowohl Erdgas als auch sogenanntes Biogas, da insbesondere auch in die Erdgasverteilnetze auch Biogas in entsprechend aufbereiteter Form eingespeist wird.

Der Grundgedanke der Erfindung kann dahingehend zusammengefasst werden, dass eine Nutzung der Gasdruckdifferenzen im Gasnetz mittels einer Expansionsmaschine vorgesehen ist, die eine Druckdifferenz Δp in elektrische Energie umsetzt, wobei bei der Entspannung ein verhältnismäßig geringer Druckabfall erzeugt werden soll, so dass über einen gegebenen Transportweg des Gases eine vorgegebene Druckdifferenz abgebaut wird, und zwar vorzugsweise derart, dass eine Taupunktunterschreitung nicht auftritt.

Erfindungsgemäß wird durch eine Hintereinanderschaltung bzw. Kaskadierung mehrerer Strömungsmaschinen ein verhältnismäßig großer Druckabbau über jeweils verhältnismäßig kleine Druckstufen erzielt.

Bei einer bevorzugten Variante des Verfahrens gemäß der Erfindung wird die Gastemperatur in Strömungsrichtung hinter der Expansionsmaschine gemessen und der Generator in Abhängigkeit der gemessenen Gastemperatur geregelt.

Besonders vorteilhaft ist es, wenn der Generator über einen Frequenzumrichter geregelt wird.

Der Generator kann beispielsweise als Asynchron-Maschine ausgebildet sein.

Bei dem Verfahren gemäß der Erfindung ist eine stufenweise Entspannung des Gases mittels mehrerer voneinander im Gasnetz beabstandeter Expansionsmaschinen vorgesehen.

Der Abstand der Expansionsmaschinen im Gasnetz ist so gewählt, dass die Gastemperatur Tₘᵢₙ hinter jeder Strömungsmaschine nicht unterschritten wird. Bei erdverlegten Gasleitungen herrscht bei der üblichen Verlegungstiefe im Erdreich ganzjährig eine Temperatur zwischen 8 und 10°C. Die Gastemperatur entspricht in der Regel der umgebenden Erdtemperatur. Bei Hintereinanderschaltung bzw. Kaskadierung mehrerer Expansionsmaschinen mit Generator wird sich bei einem entsprechenden Abstand der Expansionsmaschinen das Gas bzw. das Erdgas zwischen den einzelnen Expansionsmaschinen unter Ausnutzung des Erdwärmepotentials wieder erwärmen.

Auf diese Art und Weise ist das Verfahren gemäß der Erfindung in vorteilhafter Art und Weise nicht nur dazu geeignet, die Druckdifferenz des Gases energetisch auszunutzen, sondern vielmehr auch dazu geeignet, das Erdwärmepotential zu nutzen.

Vorteilhafterweise ist der Abstand der Expansionsmaschinen im Gasnetz so gewählt, dass die Temperatur des Gases nach einer ersten Entspannung und unmittelbar vor einer zweiten oder weiteren Entspannung zwischen 8 und 10°C beträgt, wobei der Temperaturanstieg über einen Wärmetausch der Gasleitung mit der Erdwärme in unmittelbarem Kontakt der Gasleitung mit dem Erdreich bewirkt wird.

Bei einer weiterhin vorteilhaften Variante des Verfahrens gemäß der Erfindung ist vorgesehen, dass die Entspannung des Gases mit einer Expansionsmaschine um eine Druckdifferenz Δp zwischen 0,5 und 5 bar, vorzugsweise zwischen 0,5 und 2 bar, vorzugsweise bei einem Gasvolumenstrom von zwischen 1000 und 1500 m³ vorgenommen wird.

Bei einer weiterhin vorteilhaften Variante des Verfahrens gemäß der Erfindung ist eine Laminnarisierung bzw. Vergleichmäßigung oder Gleichrichtung des Gases vorgesehen, und zwar vorzugsweise mittels eines oder mehrerer Strömungsgleichrichter. Durch die Entspannung in der Expansionsmaschine wird dem Gas eine turbulente Strömung aufgegeben, wobei es allerdings aus verschiedenen Gründen wünschenswert ist, eine gleichgerichtete Strömung über den Querschnitt der Gasleitungen zu erhalten. Deshalb ist jeweils hinter einer Expansionsmaschine eine Gleichrichtung des Gasstromes zu einer quasi laminaren Strömung vorgesehen.

Ein weiterer besonderer Gesichtspunkt der vorliegenden Erfindung betrifft eine Gasdruckentspannungseinrichtung zur Verwendung bei dem erfindungsgemäßen Verfahren. Die Gasdruckentspannungseinrichtung umfasst einen gasdurchströmbaren Gasleitungsabschnitt, eine in den Gasleitungsabschnitt integrierte Expansionsmaschine und einen in den Gasleitungsabschnitt integrierten Generator, wobei die Expansionsmaschine als axial durchströmbare Expansionsturbine ausgebildet ist, der Generator mit wenigstens einem Laufrad der Entspannungsturbine auf einer Turbinenwelle angeordnet ist, der Generator vor oder hinter der Expansionsturbine gasdurchströmbar angeordnet ist und der Gasleitungsabschnitt ein Turbinengehäuse bildet, das jeweils stirnseitig an einen weiteren Gasleitungsabschnitt anflanschbar ausgebildet ist.

Die Expansionsturbine kann beispielsweise als Axialturbine ausgebildet sein, die erfindungsgemäß als sogenannte Rohrturbine ausgestaltet ist, wobei der Generator vorzugsweise stromaufwärts der Expansionsturbine "schwebend" in dem Turbinengehäuse angeordnet ist, welches aus einem oder mehreren Gasleitungsabschnitten zusammengesetzt sein kann. Im Bereich des Generators und der Expansionsturbine können die betreffenden Gasleitungsabschnitte bzw. das Turbinengehäuse eine größere lichte Weite oder einen größeren Nenndurchmesser aufweisen als die beiderseits angeflanschte Gasleitung.

Die Gasdruckentspannungseinrichtung gemäß der Erfindung ist vorzugsweise so ausgebildet, dass diese ohne Richtungsänderung des Gases durchströmt ist, wobei das Turbinengehäuse als gradlinige Fortsetzung der betreffenden Gasleitung ausgebildet ist.

Bei einer bevorzugten Variante der Gasdruckentspannungseinrichtung gemäß der Erfindung ist weiterhin ein Strömungsgleichrichter vorgesehen, der in Strömungsrichtung des Gases hinter dem Laufrad angeordnet ist.

Dem Laufrad kann ein in Strömungsrichtung des Gehäuses feststehender Düsenkörper vorgeschaltet sein, der vorzugsweise als leitradartiges Teilkreissegment mit Leitschaufeln ausgebildet ist.

Der Düsenkörper kann beispielsweise aus Aluminium bestehen. Die auf dem Düsenkörper angeordneten Leitschaufeln, die einer gleichmäßigen Beschleunigung und Umlenkung des Gases in das Laufrad dienen, bilden zweckmäßigerweise zwischen sich Kanäle, deren Querschnitt sich in Strömungsrichtung verjüngt, so dass die Strömungsgeschwindigkeit des Gases in den Kanälen erhöht wird und der gewünschte Düseneffekt zur Beaufschlagung des Laufrades erzielt wird. Unter einem Teilkreissegment im Sinne der vorliegenden Erfindung ist zu verstehen, dass der Düsenkörper einen Kreisbogenabschnitt bildet. Der Düsenkörper kann beispielsweise in eine teilkreissegmentförmige Öffnung eines Generatorträgers eingesetzt sein.

Bei einer besonders bevorzugten und zweckmäßigen Variante der Gasdruckentspannungseinrichtung gemäß der Erfindung ist vorgesehen, dass der Generatorträger als zentrale Scheibe und Montageflansch für zwei Teile des Turbinengehäuses ausgebildet ist. Der Generatorträger kann beispielsweise als Aluminiumscheibe mit einer Durchführung für die Turbinenwelle ausgebildet sein und beiderseits Ringnuten zur Zentrierung der Teile des Turbinengehäuses aufweisen. Der Generator kann an eine Seite des Generatorträgers angeflanscht sein, so dass dieser sich quasi schwebend in einem Teil des Turbinengehäuses erstreckt. Der Generator ist in vorteilhafter Art und Weise stromaufwärts des Laufrades angeordnet und wird vorteilhafterweise von dem die Gasdruckentspannungseinrichtung durchströmenden Gas umspült, so dass auf diese Art und Weise eine besonders effektive Kühlung des Generators erzielt wird. Als Nebeneffekt wird das Gas durch Abwärme des Generators erwärmt.

Zweckmäßigerweise weist der Generator eine Bremse auf. Bei einer Trennung des Generators vom Stromnetz wird die Generatorwelle und somit das Laufrad mithilfe einer Bremse stillgesetzt, um ein Leerlaufen des Generators zu vermeiden. Sofern die Bremse nicht mehr mit Strom versorgt wird, erfolgt eine automatische Entkopplung des Generators vom Stromnetz.

Besonders vorteilhaft ist es, wenn die Turbinenwelle die Welle des Generators ist, so dass das Laufrad ohne Zwischenschaltung eines Getriebes auf den Generator wirkt.

Das Laufrad kann beispielsweise mit sich radial erstreckenden Laufschaufeln versehen sein. Die Laufschaufeln können sich als Laufschaufelkranz über den gesamten Außenumfang des Laufrades erstrecken.

Die Laufschaufeln können beispielsweise ein u- oder v-förmiges Schaufelprofil aufweisen. Das Schaufelprofil kann symmetrisch oder asymmetrisch ausgebildet sein.

Bei einer zweckmäßigen Ausgestaltung des Laufrades ist die Laufradbeschaufelung einstufig, d.h. es ist nur ein Kranz von Laufschaufeln vorgesehen, wobei die Laufschaufeln ein symmetrisches etwa v-förmiges Querschnittsprofil aufweisen und zwischen sich entsprechend gekrümmte Strömungskanäle bilden, die vorzugsweise von der Eintrittsseite zur Austrittseite einen etwa konstanten Querschnitt aufweisen.

Vorzugsweise ist der Generator der Gasdruckentspannungseinrichtung gemäß der Erfindung als Asynchronmaschine ausgebildet.

Die Gasdruckentspannungseinrichtung ist vorzugsweise als Rohrturbine ausgebildet.

Die Erfindung wird nachstehend anhand eines in den Zeichnungen dargestellten Ausführungsbeispiels erläutert.

Es zeigen:
- Fig. 1: eine schematische Darstellung einer Reihenschaltung mehrerer Gasdruckentspannungseinrichtungen gemäß der Erfindung,
- Fig. 2: eine Ansicht einer in einer Gasdruckregelstation eingebauten Gasdruckentspannungseinrichtung gemäß der Erfindung,
- Fig. 3: eine vergrößerte Ansicht der aufgeständerten Gasdruckentspannungseinrichtung gemäß der Erfindung mit beiderseits angeflanschten Leitungsreduzierungen,
- Fig. 4: die Gasdruckentspannungseinrichtung gemäß der Erfindung in perspektivischer Ansicht ohne die in Fig. 3 dargestellten Leitungsreduzierungen und freigestellt,
- Fig. 5: eine perspektivische Ansicht der Gasdruckentspannungseinrichtung gemäß der Erfindung ohne die als Turbinengehäuse ausgebildeten Gasleitungsabschnitte,
- Fig. 6: eine perspektivische Ansicht des Generatorträgers und des an diesem angeordneten Generators laufradseitig,
- Fig. 7: eine perspektivische Ansicht des Generators und des Generatorträgers von der stromaufwärtigen Seite her betrachtet,
- Fig. 8: eine perspektivische Darstellung des Düsenkörpers, betrachtet von der dem Generatorträger abgewandten stromaufwärtigen Seite,
- Fig. 9: eine perspektivische Teilansicht des Generatorträgers,
- Fig.10: eine teiltransparente Seitenansicht der Gasdruckentspannungseinrichtung gemäß der Erfindung,
- Fig. 11: eine Explosionsansicht der Gasdruckentspannungseinrichtung gemäß der Erfindung,
- Fig. 12: eine Teilansicht der Laufradbeschaufelung als perspektivische Ansicht,
- Fig. 13: eine Teilexplosionsansicht, die die Ausbildung der dem Generatorträger zugewandten Seite des Laufrades zeigt und
- Fig. 14: eine perspektivische Explosionsansicht von Teilen der Gasdruckentspannungseinrichtung, die die abstrmseitige Seite des Laufrades und dessen Befestigung auf der Turbinenwelle zeigt.

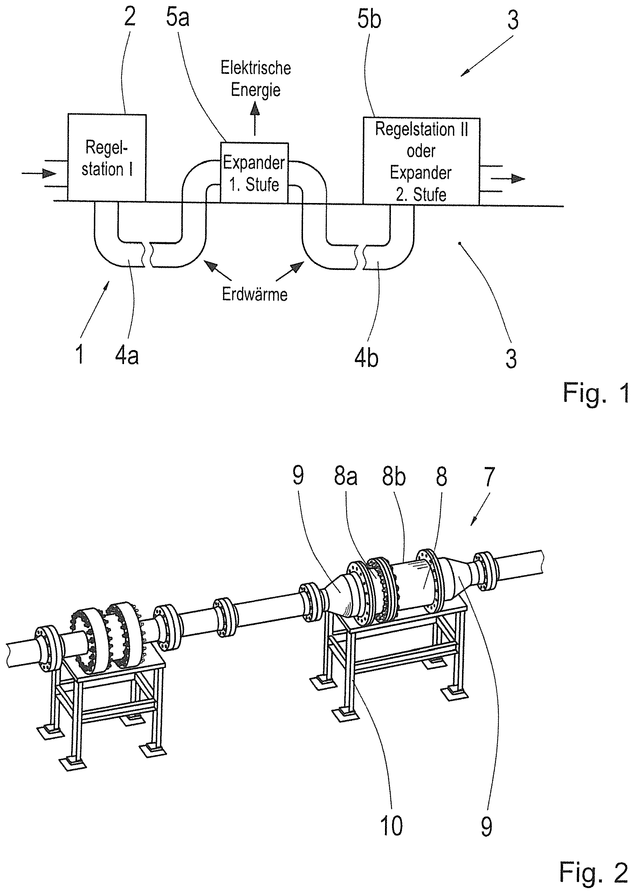

Zur Erläuterung des Verfahrens wird nachstehend zunächst auf die verhältnismäßig vereinfachte Ansicht der Fig. 1 verwiesen.

Die Fig. 1 zeigt eine Gasleitung 1 eines Gasleitungsnetzes, die bei dem beschriebenen Ausführungsbeispiel ein Teil des Gasverteilnetzes ist. Das Erdgas aus einem Gastransportnetz wird in einer ersten Gasdruckregelstation 2 beispielsweise von einem Gastransportnetzdruck von 84 bar auf einen Gasverteilnetzdruck von 16 bar entspannt. Die als Teil des Gasverteilnetzes ausgebildete Gasleitung 1 ist hinter der ersten Gasdruckregelstation 2 im Erdreich 3 verlegt. Nach einem ersten Teilabschnitt 4a der im Erdreich 3 verlegten Gasleitung 1 wird das von der Gasleitung 1 geführte Erdgas (das Erdgas kann auch aufbereitetes Biogas umfassen) in einer ersten Gasdruckentspannungseinrichtung 5a beispielsweise von einem Druck von 16 bar auf einen Druck von 15,5 bar entspannt. Die hierbei anfallende Temperaturdifferenz beträgt 10 K, so dass das beispielsweise mit einer Temperatur von 10°C der ersten Gasdruckentspannungseinrichtung 5a zugeführte Erdgas sich auf eine Temperatur von 0°C abkühlt.

Die Gasdruckentspannungseinrichtung 5a gemäß der Erfindung ist zweckmäßigerweise als Axialturbine mit einem Asynchronmotor als Generator 6 ausgestattet. Je nach Auslegung der Gasdruckentspannungseinrichtung 5a kann bei einem Gasvolumenstrom V von zwischen 1000 m³/h und 1500 m³/h (Normkubikmeter) die elektrische Leistung zwischen 4 Kw und 10 Kw betragen. Diese elektrische Leistung kann in ein Stromnetz eingespeist werden.

Hinter der ersten Gasdruckentspannungseinrichtung 5a wird das Gas über einen zweiten Teilabschnitt 4b der Gasleitung 1 in das Erdreich geführt, wobei sich das in dem zweiten Teilabschnitt 4b der Gasleitung 1 befindliche Erdgas beispielsweise wieder auf eine Temperatur von 10°C erwärmt und danach einer zweiten Gasdruckentspannungseinrichtung 5b zugeführt wird. Die zweite Gasdruckentspannungseinrichtung 5b kann beispielsweise Teil einer Gasdruckregel- und -messeinrichtung sein. Das um eine Druckdifferenz von 0,5 bar im Druck reduzierte Gas wird dort beispielsweise von einem Restdruck von 15 bar auf 14,5 bar reduziert. Dieser Vorgang kann sich mehrmals wiederholen, bis der gewünschte Enddruck erreicht ist, wobei hier zur Erwärmung des Erdgases geothermische Energie genutzt wird.

Die Gasdruckentspannungseinrichtung gemäß der Erfindung wird nachstehend unter Bezugnahme auf die Figuren 2 bis 14 erläutert.

Eine Gasdruckentspannungseinrichtung als Turbineneinheit 7 ist in Figur 2 in der Einbausituation in einer Gasdruckregelstation 2 dargestellt. Im Folgenden wird der Begriff "Turbineneinheit" synonym für "Gasdruckentspannungseinrichtung" verwendet. Die Turbineneinheit 7 ist als axial durchströmbare Expansionsturbine ausgebildet. Die Turbineneinheit 7, wie in Figur 2 dargestellt, umfasst ein rohrförmig ausgebildetes Turbinengehäuse 8 mit einem ersten Gehäuseteil 8a und einem zweiten Gehäuseteil 8b, welche jeweils an eine Leitungsreduzierung 9 angeflanscht sind. Die Leitungsreduzierung 9 ist ein Rohrabschnitt mit einem einerseits großen Rohrdurchmesser und andererseits kleinen Rohrdurchmesser, wobei der kleine Rohrdurchmesser im Durchmesser der an diesen angeflanschten Gasleitung 1 entspricht. Das Turbinengehäuse 8 ist mit den Leitungsreduzierungen 9 in die Gasleitung 1 eingesetzt und bildet eine geradlinige Fortführung der Gasleitung. Die Turbineneinheit 7 ist auf einen Lagerbock 10 aufgeständert, der bei dem beschriebenen Ausführungsbeispiel als Profilträgerunterkonstruktion mit vier Standfüßen ausgebildet ist. Die Leitungsreduzierungen 9 können beispielsweise eine Reduzierung von einem Nenndurchmesser von 400 mm auf einen Nenndurchmesser von etwa 200 mm (DN400-DN200) bewirken. Für den Fall, dass die Gasleitung 1 einen größeren Nenndurchmesser aufweist, kann ggf. die Gasleitung 1 jeweils beiderseits unmittelbar an das Turbinengehäuse 8 angeflanscht sein.

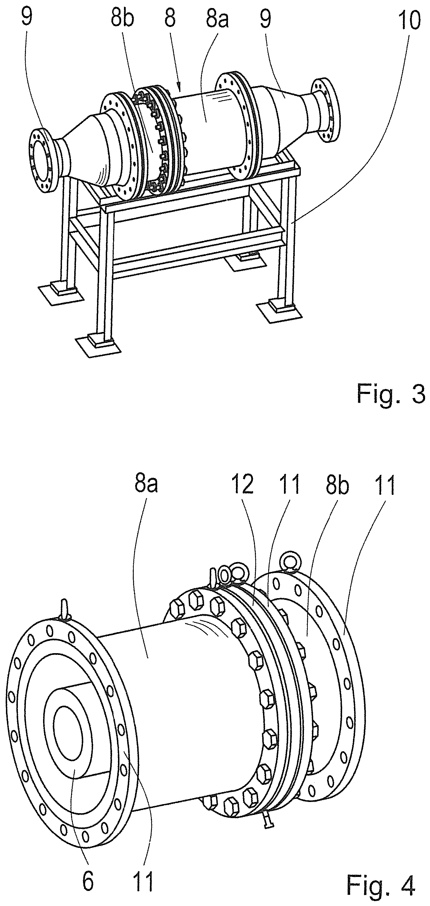

Wie dies auch aus Figur 4 ersichtlich ist, sind das erste Gehäuseteil 8a und das zweite Gehäuseteil 8b jeweils als Rohrabschnitte mit einem umlaufenden Montageflansch 11 ausgebildet. Das erste Gehäuseteil 8a und das zweite Gehäuseteil 8b der Turbineneinheit 7 schließen einen Generatorträger 12 ein, der den Generator 6 aufnimmt. Der Generator 6 ist so an dem Generatorträger 12 befestigt, dass dieser in dem ersten Gehäuseteil 8a des Turbinengehäuses 8 quasi schwebend angeordnet ist, wie dies andeutungsweise der Figur 4 zu entnehmen ist.

Der Generatorträger 12 kann beispielsweise als Flanschring aus Aluminium ausgebildet sein, der zwischen den Montageflanschen 11 der Gehäuseteile 8a, 8b eingespannt ist.

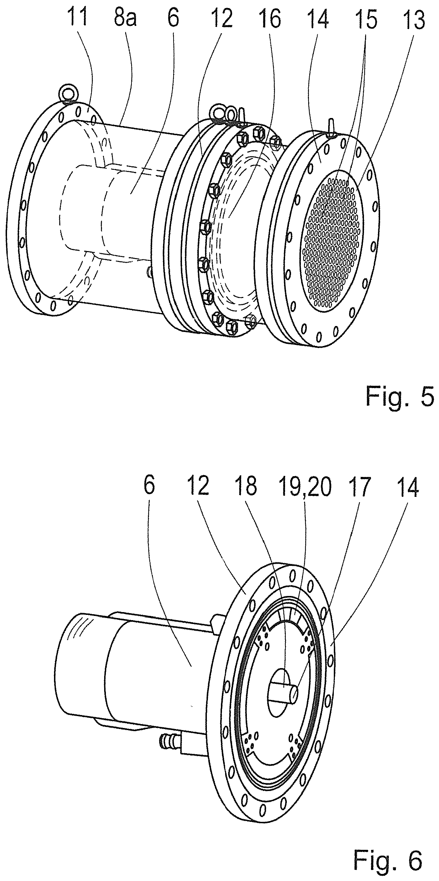

Die Figur 5 zeigt eine teiltransparente perspektivische Ansicht der Turbineneinheit 7, bei der aus Gründen der vereinfachten Darstellung die Wandung der Gehäuseteile 8a, 8b nicht dargestellt ist. Die Figur 5 zeigt die Turbineneinheit 7 freigestellt von der Abströmseite. Dem Betrachter zugewandt ist ein an das zweite Gehäuseteil 8b angeflanschter Strömungsgleichrichter in Form einer Lochplatte 13, die ebenso wie die Montageflansche 11 und der Generatorträger 12 einen umlaufenden Lochkreis 14 aufweist.

Die Lochkreise 14 können jeweils Befestigungsbohrungen mit genormtem Durchmesser aufweisen. Die Lochplatte 13 ist darüber hinaus mit kreisrunden Durchströmungsöffnungen 15 versehen, die in verhältnismäßig dichter Anordnung und mit regelmäßigen Abständen über die von dem Lochkreis 14 eingeschlossene Fläche verteilt angeordnet ist. Diese Durchströmungsöffnungen 15 bewirken hinter der Entspannung des Gases durch ein Laufrad 16 der Turbineneinheit 7 eine Vergleichmäßigung bzw. Laminarisierung bzw. Gleichrichtung der Gasströmung.

Das Laufrad 16 ist auf einer Turbinenwelle 17 angeordnet, welche durch eine Wellendurchführung 18 des Generatorträgers 12 in den als Asynchronmaschine ausgebildeten Generator 6 geführt ist. Die Turbinenwelle 17 ist gleichzeitig auch die Generatorwelle.

Der Generatorträger 12 umfasst darüber hinaus eine teilkreissegmentförmige Düsenöffnung 19, in welcher ein teilkreissegmentförmiger Düsenkörper 20 eingesetzt ist. Der Düsenkörper 20 kann beispielsweise als Aluminiumdruckgussbauteil ausgebildet sein.

Obwohl bei dem beschriebenen Ausführungsbeispiel wesentliche Teile des Turbinengehäuses und das Laufrad 16 aus Stahl ausgebildet sind, ist es durchaus im Rahmen der Erfindung, diese Teile auch aus thermoplastischem oder duroplastischem Kunststoff auszubilden.

Der Generatorträger 12 gemäß dem beschriebenen Ausführungsbeispiel umfasst nur eine einzige Düsenöffnung 19 sowie einen in die Düsenöffnung 19 eingesetzten Düsenkörper 20, im Rahmen der Erfindung können aber in dem Generatorträger 12 mehrere Düsenöffnungen 19 vorgesehen sein, in die entsprechend ausgebildete Düsenkörper 20 eingesetzt sind.

Im Rahmen der Erfindung kann vorgesehen sein, den Düsenkörper 20 auswechselbar auszubilden, sodass der Düsenkörper 20 durch einen Düsenkörper mit einer anderen Strömungscharakteristik austauschbar ist.

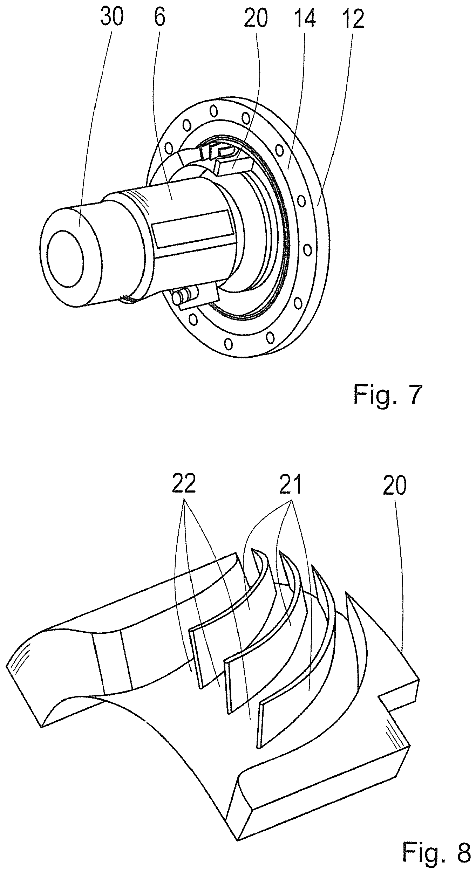

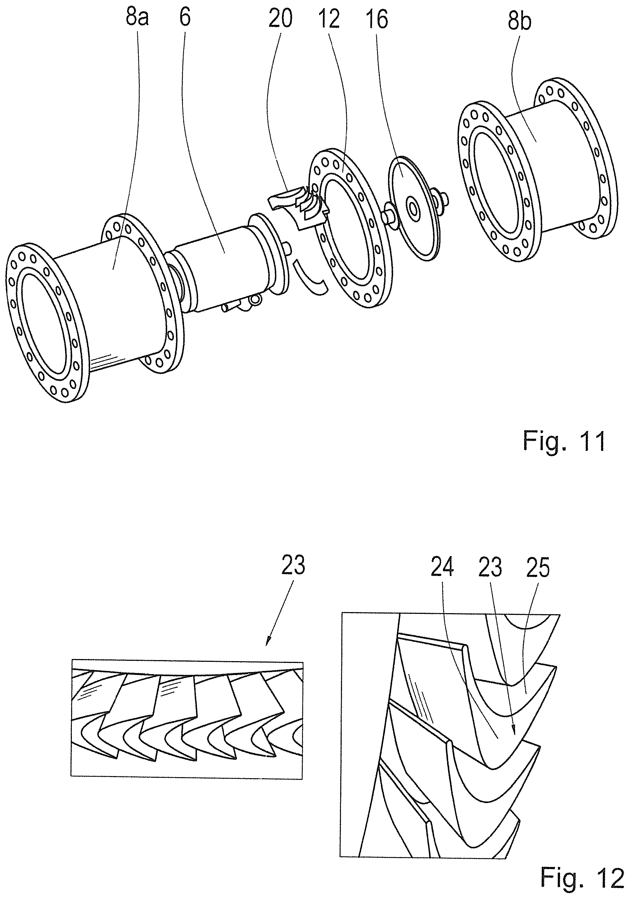

Wie dies insbesondere der Figur 8 zu entnehmen ist, ist der Düsenkörper 20 mit Leitschaufeln 21 versehen, die innerhalb des Lochkreises 14 des Generatorträgers 12 so angeordnet sind, dass von den Leitschaufeln 21 gebildete Kanäle 22 auf eine umfängliche Laufradbeschaufelung 23 des Laufrades 16 ausgerichtet sind. Die Kanäle 22 verjüngen sich von der Anströmseite - das ist die in der Figur 8 dem Betrachter zugewandte Seite - zur Abströmseite, die dem Laufrad 16 zugewandt ist. Die Ausgestaltung des Laufrades 16 ist beispielsweise aus den Figuren 11 und 12 zu entnehmen. Das Laufrad 16 ist über seinen gesamten Umfang mit der Laufradbeschaufelung 23 versehen, die V-förmig, radial auswärts gerichtete Schaufelprofile 24 umfasst. Die Schaufelprofile 24 bilden jeweils zwischen sich V-förmig verlaufende Strömungskanäle 25 mit etwa gleichbleibendem Querschnitt.

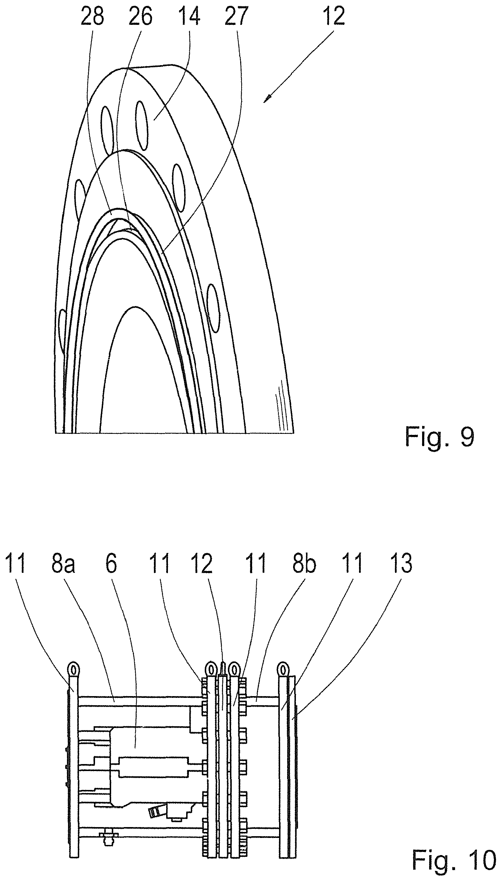

Wie beispielsweise aus der Figur 9 zu entnehmen ist, umfasst der Generatorträger 12 eine innerhalb des Lochkreises 14 umlaufende Zentriernut 26 zur Aufnahme des Generators 6 sowie weiterhin eine die Zentriernut 26 einfassenden Dichtring 27 mit einem O-Ring 28 zur Abdichtung des ersten Gehäuseteils 8a gegen den Generatorträger 12. Eine entsprechende Abdichtung ist auf der dem Laufrad 16 zugewandten Seite des Generatorträgers 12 vorgesehen.

Eine Explosionsansicht der Turbineneinheit 7 ist in Figur 11 dargestellt.

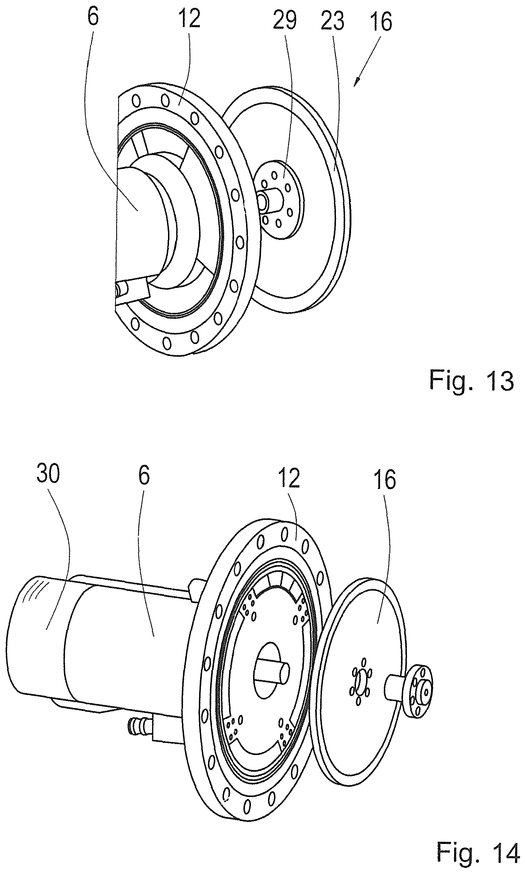

Eine weitere Teilexplosionsansicht der Turbineneinheit 7 ist in Figur 13 dargestellt, aus der ersichtlich ist, dass das Laufrad 16 auf der dem Generator 6 zugewandten Seite innerhalb der Laufradbeschaufelung zwecks Gewichtsreduzierung eine reduzierte Dicke aufweist, d. h. zwischen einem Nabenring 29 und der Laufradbeschaufelung 23 abgedreht ist. Obwohl in diesem Zusammenhang der Begriff "abgedreht" eine spanabhebende Bearbeitung des betreffenden Bauteils bezeichnet, kann das Laufrad 16 gleichwohl entsprechend aus thermoplastischem Kunststoff ausgebildet sein. Der Generator 6 umfasst eine Bremse 30.

Die elektrische Verkabelung zu dem Generator 6 ist durch das Turbinengehäuse 8 abgedichtet nach außen geführt, die Anschlüsse sind der Einfachheit halber nicht bezeichnet und nicht dargestellt.

### Bezugszeichenliste

- 1: Gasleitung
- 2: erste Gasdruckregelstation
- 3: Erdreich
- 4a: erster Teilabschnitt
- 4b: zweiter Teilabschnitt
- 5a: erste Gasdruckentspannungseinrichtung
- 5b: zweite Gasdruckentspannungseinrichtung
- 6: Generator
- 7: Turbineneinheit
- 8: Turbinengehäuse
- 8a: erster Gehäuseteil
- 8b: zweiter Gehäuseteil
- 9: Leitungsreduzierung
- 10: Lagerbock
- 11: Montageflansch
- 12: Generatorträger
- 13: Lochplatte
- 14: Lochkreis
- 15: Durchströmungsöffnung
- 16: Laufrad
- 17: Turbinenwelle
- 18: Wellendurchführung
- 19: Düsenöffnung
- 20: Düsenkörper
- 21: Leitschaufeln
- 22: Kanäle
- 23: Laufradbeschaufelung
- 24: Schaufelprofile
- 25: Strömungskanäle
- 26: Zentriernut
- 27: Dichtring
- 28: O-Ring
- 29: Nabenring
- 30: Bremse

## Patentansprüche

1. Verfahren zur Stromerzeugung innerhalb eines Gasnetzes mit erdverlegten Gasleitungen (1) unter Ausnutzung einer Gasentspannung von einem ersten höheren Gasdruckniveau auf ein zweites niedrigeres Gasdruckniveau, von einem ersten höheren Gastransportnetz- und/oder Gasverteilnetz-Druckniveau auf ein zweites Gasbereitstellungsdruckniveau, unter Verwendung mehrerer Expansionsmaschinen und unter Verwendung wenigstens eines von den Expansionsmaschinen angetriebenen Generators (6), **dadurch gekennzeichnet, dass** eine Gasvorwärmung ausschließlich unter Ausnutzung von Erdwärme durchgeführt wird und eine Entspannung mit einem Druckabfall Δp über die Expansionsmaschinen erfolgt, bei der eine für eine Taupunktunterschreitung kritische Gastemperatur Tₘᵢₙ nicht unterschritten wird, wobei eine stufenweise Entspannung des Gases mittels mehrerer voneinander im Gasnetz beabstandeten Expansionsmaschinen vorgesehen ist und die Temperatur des Gases nach einer ersten Entspannung unmittelbar vor einer zweiten oder weiteren Entspannung zwischen 8°C und 10°C beträgt, wobei der Temperaturanstieg über einen Wärmetausch der Gasleitung mit der Erdwärme bewirkt wird.

2. Verfahren nach Anspruch 1, wobei die Gasleitung (1) in unmittelbarem Kontakt mit dem Erdreich (3) verlegt ist.

3. Verfahren nach Anspruch 1, wobei die Gastemperatur in Strömungsrichtung hinter den Expansionsmaschinen gemessen wird und der wenigstens eine Generator (6) in Abhängigkeit der Gastemperatur geregelt wird.

4. Verfahren nach Anspruch 3, wobei der wenigstens eine Generator (6) über einen Frequenzumrichter geregelt wird.

5. Verfahren nach einem der Ansprüche 1 bis 4, wobei als Generator (6) eine Asynchronmaschine Anwendung findet.

6. Verfahren nach Anspruch 1, wobei der Abstand der Expansionsmaschinen im Gasnetz so gewählt wird, dass die Gastemperatur Tₘᵢₙ hinter jeder Expansionsmaschine nicht unterschritten wird.

7. Verfahren nach einem der Ansprüche 1 bis 6, wobei die Entspannung des Gases mit den Expansionsmaschinen um eine Druckdifferenz Δp zwischen 0,5 und 5 bar, vorzugsweise zwischen 0,5 und 2 bar, vorzugsweise bei einem Gasvolumenstrom zwischen 1000 und 1500 m³/h vorgenommen wird.

8. Verfahren nach einem der Ansprüche 1 bis 7, wobei in Strömungsrichtung hinter der Entspannung des Gases eine Gleichrichtung der Gasströmung vorgenommen wird.

9. Anordnung von in einer Gasleitung hintereinander geschalteten oder kaskadierten Gasdruckentspannungseinrichtungen (5a, 5b) in einem Gasnetz zur Verwendung bei dem Verfahren gemäß einem der Ansprüche 1 bis 8, deren Abstand voneinander so gewählt ist, dass die Temperatur des Gases nach einer ersten Entspannung unmittelbar vor einer zweiten oder weiteren Entspannung zwischen 8°C und 10°C beträgt, wobei der Temperaturanstieg über einen Wärmetausch der Gasleitung mit der Erdwärme bewirkt wird, umfassend einen gasdruchströmbaren Gasleitungsabschnitt, eine in den Gasleitungsabschnitt integrierte Expansionsmaschine und einen in den Gasleitungsabschnitt integrierten Generator (6), wobei die Expansionsmaschine als axial durchströmbare Expansionsturbine ausgebildet ist, der Generator (6) mit wenigstens einem Laufrad (16) der Expansionsturbine auf einer Turbinenwelle (17) angeordnet ist, der Generator (6) vor oder hinter der Expansionsturbine gasumströmbar angeordnet ist und der Gasleitungsabschnitt ein Turbinengehäuse (8) bildet, das jeweils stirnseitig an einen weiteren Gasleitungsabschnitt anflanschbar ausgebildet ist.

10. Anordnung nach Anspruch 9, wobei weiterhin ein Strömungsgleichrichter vorgesehen ist, der in Strömungsrichtung des Gases hinter dem Laufrad (16) angeordnet ist

11. Anordnung nach einem der Ansprüche 9 oder 10, wobei dem Laufrad (16) in Strömungsrichtung des Gases ein feststehender Düsenkörper (20) vorgeschaltet ist, der als feststehendes Leitrad-Teilkreissegment mit Leitschaufeln (21) ausgebildet ist.

12. Anordnung nach Anspruch 11, wobei der Düsenkörper (20) in eine teilkreissegmentförmige Düsenöffnung (19) eines Generatorträgers (12) eingesetzt ist.

13. Anordnung nach Anspruch 12, wobei der Generatorträger (12) als Zentrierscheibe und Montageflansch für zwei Teile des Turbinengehäuses (8) ausgebildet ist.

14. Anordnung nach einem der Ansprüche 9 bis 13, wobei der Generator (6) eine Bremse aufweist.

15. Anordnung nach einem der Ansprüche 9bis 14, wobei die Turbinenwelle (17) die Welle des Generators ist, sodass das Laufrad (16) ohne Zwischenschaltung eines Getriebes auf den Generator (6) wirkt.

16. Anordnung nach einem der Ansprüche 9 bis 15, wobei der Generator (6) als Asynchronmaschine ausgebildet ist.

## Claims

1. Method for generating electricity within a gas network with buried gas pipelines (1) using a gas expansion of a first higher gas pressure level to a second lower gas pressure level, from a first higher gas transport network and/or gas distribution network pressure level to a second gas supply pressure level, using multiple expansion machines and under use of at least one generator (6) driven by the expansion machines, **characterised in that** gas preheating is carried out exclusively by utilising geothermal heat and expansion with a pressure drop Δ p across the expansion machines in which the temperature of the gas does not fall below a critical value Tₘᵢₙ below the dew point, whereby the gas is expanded in stages by means of a plurality of expansion machines spaced apart from one another in the gas network, and the temperature of the gas after a first expansion immediately before a second or further expansion is between 8°C and 10°C, the temperature rise being achieved by means of a heat exchange of the gas line with the geothermal energy.

2. The method according to claim 1, wherein the gas pipeline (1) is laid in direct contact with the ground (3).

3. The method according to claim 1 wherein the gas temperature is measured in the direction of flow behind the expansion machines and the at least one generator (6) is controlled as a function of the gas temperature.

4. The method of claim 3, wherein the at least one generator (6) is controlled via a frequency converter.

5. Method according to any one of claims 1 to 4, wherein an asynchronous machine is used as the generator (6).

6. Method according to claim 1, wherein the distance of the expansion machines in the gas network is selected so that the gas temperature Tₘᵢₙ after each expansion machine is not fallen short of.

7. The method of any one of claims 1 to 6, wherein the expansion of the gas with the expansion machines around a pressure difference Δ p between 0.5 and 5 bar, preferably between 0.5 and 2 bar, preferably at a gas volume flow between 1000 and 1500m3/h is carried out.

8. The method according to any one of claims 1 to 7, wherein the gas flow is rectified downstream of the expansion of the gas.

9. Arrangement of gas pipelines connected in series or in a cascaded gas pressure relief devices (5a, 5b) in a gas network for use in the method of any one of claims 1 to 8, the spacing of which is such that the temperature of the gas after a first expansion immediately before a second or further expansion is between 8°C and 10°C, the temperature rise being achieved by heat exchange of the gas conduit with the geothermal energy, comprising a gas pipe section through which gas can flow, an expansion machine integrated into the gas pipe section and a generator (6) integrated into the gas pipe section, the expansion machine being designed as an expansion turbine through which gas can flow axially, the generator (6) and at least one impeller (16) of the expansion turbine is arranged on a turbine shaft (17), the generator (6) is arranged in such a way that gas can flow around it upstream or downstream of the expansion turbine, and the gas line section forms a turbine housing (8) which is designed such that it can be flanged in each case on the end face to a further gas line section.

10. Arrangement according to claim 9, wherein furthermore a flow rectifier is provided, which is arranged downstream of the impeller (16) in the direction of flow of the gas.

11. Arrangement according to any one of claims 9 or 10 wherein a fixed nozzle body (20) is arranged in front of the impeller (16) in the direction of flow of the gas, which is designed as a fixed guide wheel circle segment with guide vanes (21).

12. Arrangement according to claim 11, wherein the nozzle body (20) is inserted into a nozzle opening (19) of a generator carrier (12) wherein the opening is in the form of a circle segment.

13. Arrangement according to claim 12, wherein the generator carrier (12) is designed as a centring disc and mounting flange for two parts of the turbine housing (8).

14. Arrangement according to any one of claims 9 to 13, wherein the generator (6) comprises a brake.

15. Arrangement according to any one of claims 9 to 14, wherein the turbine shaft (17) is the shaft of the generator, so that the impeller (16) acts upon the generator (6) without the interposition of a gearbox.

16. Arrangement according to any one of claims 9 to 15, wherein the generator (6) is designed as an asynchronous machine.

## Revendications

1. Un procédé permettant de générer de l'électricité au sein d'un réseau de gaz doté de pipelines de gaz enterrés (1) utilisant une expansion de gaz d'un premier niveau de pression de gaz supérieur à un deuxième niveau de pression de gaz inférieur, à partir d'un premier réseau de transport de gaz supérieur et/ou d'un niveau de pression de réseau de distribution de gaz à un deuxième niveau de pression d'approvisionnement en gaz, utilisant de multiples machines d'expansion et sous l'utilisation d'au moins un générateur (6) commandé par les machines d'expansion, **caractérisé en ce que** le préchauffage du gaz est effectué exclusivement en utilisant de la chaleur géothermique et une expansion avec une chute de pression Δp à travers les machines d'expansion dans lesquelles la température du gaz ne tombe pas sous une valeur critique Tₘᵢₙ sous le point de rosée, le gaz étant ainsi expansé par étapes au moyen d'une pluralité de machines d'expansion espacées les unes des autres dans le réseau de gaz, et la température du gaz après une première expansion immédiatement avant une deuxième expansion ou une expansion supplémentaire se situe entre 8 °C et 10 °C, l'augmentation de température étant obtenue au moyen d'un échange de chaleur de la ligne de gaz avec l'énergie géothermique.

2. Le procédé selon la revendication 1, dans lequel le pipeline de gaz (1) est posé en contact direct avec le sol (3).

3. Le procédé selon la revendication 1, dans lequel la température du gaz est mesurée dans la direction de flux derrière les machines d'expansion et l'au moins un générateur (6) est contrôlé en fonction de la température du gaz.

4. Le procédé selon la revendication 3, dans lequel l'au moins un générateur (6) est contrôlé via un convertisseur de fréquence.

5. Le procédé selon l'une quelconque des revendications 1 à 4, dans lequel une machine asynchrone est utilisée en tant que générateur (6).

6. Un procédé selon la revendication 1, dans lequel la distance des machines d'expansion dans le réseau de gaz est sélectionnée de sorte que la température de gaz Tₘᵢₙ après chaque machine d'expansion ne tombe pas.

7. Le procédé selon l'une quelconque des revendications 1 à 6, dans lequel l'expansion du gaz avec les machines d'expansion autour d'une différence de pression Δp entre 0,5 et 5 bars, de préférence entre 0,5 et 2 bars, de préférence à un flux de volume de gaz entre 1000 et 1500 m3/h est effectuée.

8. Le procédé selon l'une quelconque des revendications 1 à 7, dans lequel le flux de gaz est un flux descendant rectifié de l'expansion du gaz.

9. Un agencement de pipelines de gaz reliés en série ou dans des dispositifs de décompression de gaz en cascade (5a, 5b) dans un réseau de gaz pour une utilisation dans le procédé selon l'une quelconque des revendications 1 à 8, dont l'espacement est tel que la température du gaz après une première expansion immédiatement avant une deuxième expansion ou une expansion supplémentaire se situe entre 8°C et 10°C, l'augmentation de température étant obtenue par un échange de chaleur de la conduite de gaz avec l'énergie géothermique, comprenant une section de tuyau de gaz à travers laquelle le gaz peut circuler, une machine d'expansion intégrée dans la section de tuyau de gaz et un générateur (6) intégré dans la section de tuyau de gaz, la machine d'expansion étant conçue comme une turbine d'expansion à travers laquelle du gaz peut circuler de manière axiale, le générateur (6) et au moins une roue à aubes (16) de la turbine d'expansion sont disposés sur un arbre de turbine (17), le générateur (6) est disposé de sorte que du gaz peut circuler autour de lui en amont ou en aval de la turbine d'expansion, et la section de ligne de gaz forme un boîtier de turbine (8) qui est conçu de sorte qu'il peut être bridé dans chaque cas sur la face d'extrémité à une section de ligne de gaz supplémentaire.

10. Un agencement selon la revendication 9, dans lequel en outre un redresseur de flux est fourni, qui est agencé en aval de la roue à aubes (16) dans la direction de flux du gaz.

11. Un agencement selon l'une quelconque des revendications 9 ou 10 dans lequel un corps de buse fixe (20) est disposé à l'avant de la roue à aubes (16) dans la direction de flux du gaz, qui est conçue comme un segment de cercle de roue de guidage fixe avec des aubes directrices (21).

12. Un agencement selon la revendication 11, dans lequel le corps de buse (20) est inséré dans une ouverture de buse (19) d'un support de générateur (12) dans lequel l'ouverture est sous la forme d'un segment de cercle.

13. Un agencement selon la revendication 12, dans lequel le support de générateur (12) est conçu comme un disque de centrage et bride de montage pour deux parties du boîtier de turbine (8).

14. Un agencement selon l'une quelconque des revendications 9 à 13, dans lequel le générateur (6) comprend un frein.

15. Un agencement selon l'une quelconque des revendications 9 à 14, dans lequel l'arbre de turbine (17) est l'arbre du générateur, de sorte que la roue à aubes (16) agit sur le générateur (6) sans l'interposition d'une boîte de vitesses.

16. Un agencement selon l'une quelconque des revendications 9 à 15, dans lequel le générateur (6) est conçu comme une machine asynchrone.
